# FASCICULE DE BREVET EUROPEEN

(11) **EP 2 682 725 B1**
(45) Date de publication et mention de la délivrance du brevet: **31.05.2017**
(21) Numéro de dépôt: 13163714.2
(22) Date de dépôt: 15.04.2013
(51) Int. Cl.: G01L 7/04

(54) **Manomètre et bouteille munie d'un tel manomètre**
Manometer und mit einem solchen Manometer ausgestattete Flasche
Pressure gauge and bottle provided with such a pressure gauge

(30) Priorité: 19.06.2012 FR 1255745
(43) Date de publication de la demande: 08.01.2014
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Frenal, Antoine, 95460 EZANVILLE (FR); Pisot, Philippe, 38140 APPRIEU (FR); Vignerol, Samuel, 95380 LOUVRES (FR)
(74) Mandataire: De Cuenca, Emmanuel Jaime

(56) Documents cités:
- US-A- 3 163 046
- US-A- 3 952 598
- US-A- 4 196 633

## Description

La présente invention concerne un manomètre ainsi qu'une bouteille de gaz munie d'un tel manomètre.

L'invention concerne plus particulièrement un manomètre de mesure et d'indication de la pression comprenant un corps muni d'une surface d'attache destinée à coopérer avec un support pour le manomètre, un tube manométrique logé au moins en partie dans le corps, le tube manométrique comprenant une extrémité amont ouverte communiquant avec l'extérieur du corps, une portion centrale tubulaire hélicoïdale raccordée à une extrémité aval comprenant une tige formant une aiguille, l'aiguille étant mobile angulairement dans une zone de lecture du boîtier munie de repères ou graduations, la zone de lecture étant refermée par une fenêtre translucide.

L'indication de la pression d'utilisation régnant au sein des bouteilles de gaz est une fonction essentielle très appréciée par les utilisateurs.

Dans la majorité des cas, ces indications sont fournies par l'intégration d'un manomètre sur le circuit à haute pression et/ou le circuit à basse pression du robinet monté sur la bouteille de gaz (robinet à détente intégrée le cas échéant).

Il existe plusieurs types de familles de manomètres pouvant équiper les robinets ou les robinets à détente intégrée destinés à être montés sur les bouteilles de gaz.

Par exemple, on connait les manomètres à tube de Bourdon munis d'un mécanisme d'amplification et d'entraînement de l'aiguille. Dans cette technologie, l'aiguille d'indication est montée sur un axe de rotation et est reliée au tube de Bourdon via une succession de biellettes et de petits engrenages. Ces petits composants mécaniques forment le mécanisme qui permet d'amplifier la déformation du tube de Bourdon sous l'effet de la pression. L'aiguille est ainsi entraînée dans un mouvement de rotation dont l'amplitude est la plage de lecture du manomètre.

Cette technologie présente l'intérêt d'offrir à l'utilisateur une plage de lecture à grande amplitude, mais la somme des petits composants mécaniques entre le tube de bourdon et l'aiguille augmente la fragilité du manomètre face aux chocs et vibrations.

Une autre technologie connue est le manomètre à tube spiralé terminé par l'aiguille. Le tube manométrique se présente sous la forme d'une spirale borgne. Sa déformation se traduit par le déplacement de l'extrémité de la spirale jouant le rôle d'aiguille ayant une trajectoire en arc de cercle dont l'amplitude est la plage de lecture du manomètre.

Cette technologie présente l'intérêt d'être suffisamment souple pour absorber les vibrations mais n'est pas assez robuste pour résister aux chocs. De plus, la plage de lecture de cette technologie est généralement plus étroite que pour la technologie précédente.

Une autre technologie connue est le manomètre à tube hélicoïdal terminé par l'aiguille. Le tube manométrique, qui accueille en son sein le gaz sous pression objet de la mesure, se présente sous la forme d'une hélice borgne dont l'essentiel de sa longueur se trouve à l'intérieur d'un alésage du corps du manomètre. La déformation du tube sous l'effet de la pression du gaz se traduit par le déplacement de l'extrémité de l'hélice jouant le rôle d'aiguille. La trajectoire de l'aiguille est un arc de cercle dont l'amplitude est la plage de lecture du manomètre.

Du fait que l'essentiel de la longueur du tube manométrique est enfermé à l'intérieur d'un alésage du corps du manomètre, limitant ainsi sa liberté de mouvements parasites, cette technologie résiste relativement mieux aux chocs. Cependant, une partie du tube manométrique reste en dehors de l'alésage, ce qui représente la faiblesse de cette technologie en terme de solidité.

Les manomètres suivent le cycle de vie des bouteilles. De ce fait, les manomètres subissent les mêmes sollicitations ou agressions que les bouteilles, par exemple les vibrations dues au transport ou les chocs causés par leur manutention ou par des chutes accidentelles. Ces sollicitations mécaniques sont généralement transmises au tube manométrique, voire amplifiées, ce qui a pour conséquence une déformation de celui-ci dégradant ainsi l'information transmise à l'utilisateur, avec ou non une fissuration entraînant une fuite.

Le document US3163046A décrit un manomètre comprenant un tube manométrique relié à une aiguille via une tige maintenue par un palier.

Les documents US4196663A et US3952598 décrivent des manomètres à tube de Bourdon.

Un but de la présente invention est de pallier tout ou partie des inconvénients de l'art antérieur relevés ci-dessus.

L'invention concerne en particulier la technologie de manomètre comportant un tube manométrique hélicoïdal.

A cette fin, le manomètre selon l'invention, par ailleurs conforme à la définition générique qu'en donne le préambule ci-dessus, est essentiellement caractérisé en ce que la face de la fenêtre située en vis-à-vis de l'aiguille comprend un axe de positionnement du tube manométrique, l'axe de positionnement étant logé au centre de l'extrémité de la portion hélicoïdale du tube qui débouche dans la zone de lecture.

Un tel agencement permet d'éviter avantageusement les déformations d'un tube manométrique hélicoïdal en limitant sont débattement à sa seule course angulaire qu'il doit couvrir en conditions normales de fonctionnement.

Par ailleurs, des modes de réalisation de l'invention peuvent comporter l'une ou plusieurs des caractéristiques suivantes :
- l'axe de positionnement s'étend à l'intérieur de la portion hélicoïdale sur une partie de la longueur de cette portion hélicoïdale et jusqu'à une portion située hors de la zone de lecture,
- l'axe de positionnement est solidaire de la fenêtre ou est monobloc avec la fenêtre,
- la zone de lecture du boîtier comprend une ou plusieurs butées de limitation de la rotation de l'aiguille,
- la au moins une butée est fixée ou est monobloc avec l'un au moins des éléments suivants : la fenêtre, le corps définissant la zone de lecture, un support de graduation disposé dans la zone de lecture,
- le manomètre comporte une première et une seconde butées de limitation de la rotation de l'aiguille, les deux butées définissant un secteur angulaire de rotation pour l'aiguille entre deux positions correspondant respectivement à une configuration « non pressurisée » du tube manométrique et une configuration «pressurisée à une pression maximum de service déterminée » du tube manométrique, dans la configuration non pressurisée du tube un jeu est prévu entre l'aiguille et la première butée pour permettre une liberté de mouvement à l'aiguille de façon à absorber des oscillations dues à des vibrations,
- le tube manométrique comprend, d'un seul tenant, une extrémité amont rectiligne et ouverte pour accueillir du gaz sous pression, la portion centrale hélicoïdale rectiligne et l'aiguille raccordées radialement à une extrémité de la portion centrale hélicoïdale,
- au moins une partie de la portion centrale hélicoïdale rectiligne est logée dans une portion de forme générale cylindrique du corps et munie de la surface d'attache,
- le manomètre comporte un jeu entre l'axe de positionnement et la portion hélicoïdale qui l'accueille, ledit jeu étant prévu pour permettre la déformation du tube entre un état non pressurisé et un état pressurisé de son volume intérieur par rapport à l'extérieur.

L'invention concerne également une bouteille de gaz sous pression comprenant un robinet muni d'un manomètre, le manomètre étant conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures données à titre illustratif mais non limitatif, dans lesquelles :
- la figure 1 représente une vue extérieure en perspective isométrique d'un exemple possible de réalisation d'un manomètre selon l'invention,
- la figure 2 est une vue en coupe longitudinale du manomètre de la figure 1,
- la figure 3 est une vue extérieure en perspective isométrique du tube manométrique hélicoïdal du manomètre des figures 1 et 2,
- la figure 4 est une vue de face du manomètre des figures 1 et 2,
- la figure 5 est une vue de la face intérieure en perspective isométrique de la fenêtre translucide du manomètre des figures 1 et 2,
- la figure 6 illustre de façon schématique et partielle un exemple de bouteille de gaz munie d'un robinet comprenant un tel manomètre.

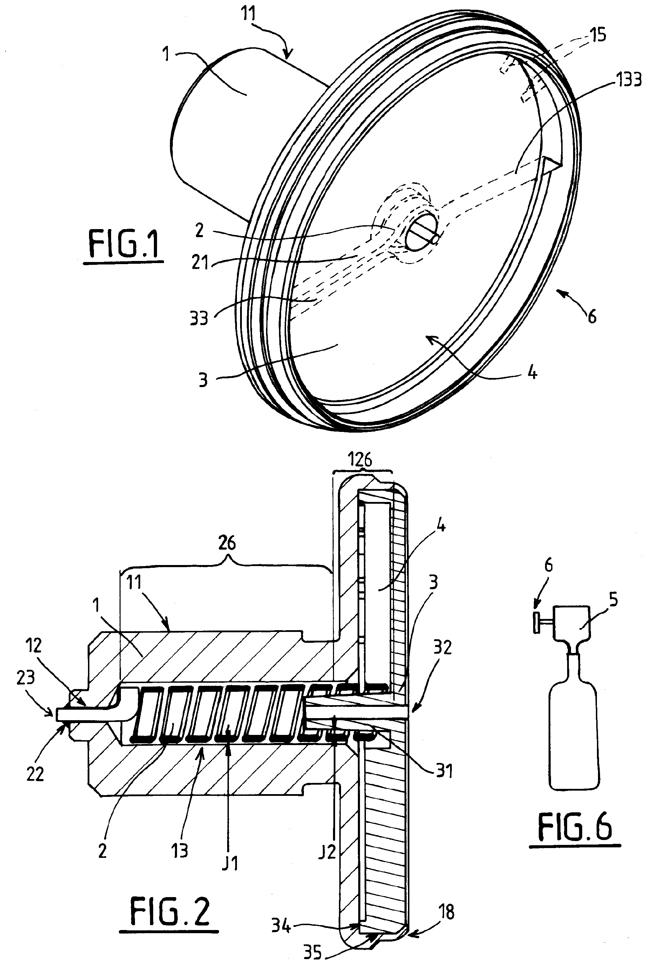

La figure 1 représente manomètre comprenant un corps 1, un tube 2 manométrique hélicoïdal interne et une fenêtre 3 ou vitre transparente. Le corps 1 du manomètre 6 comporte une portion cylindrique munie d'une surface 11, par exemple filetée, pour permettre son installation sur l'équipement de l'application mis sous pression (par exemple pour être vissé dans le corps d'un robinet 5 de bouteille de gaz tel que décrit à la figure 6).

La figure 2 montre l'intégration du tube 2 manométrique hélicoïdal à l'intérieur du manomètre 6.

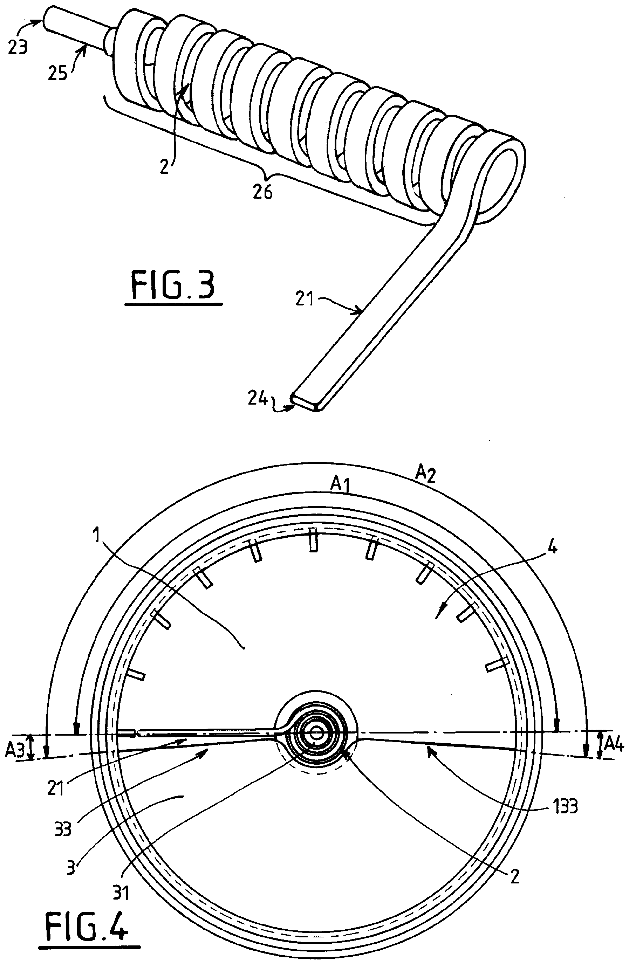

Le tube 2 manométrique hélicoïdal (détaillé à la figure 3) est borgne, c'est-à-dire que sont extrémité amont 23 est ouverte pour accueillir le fluide sous pression dont la pression est à mesurée. L'extrémité aval 24 du tube 2 est fermée. Le tube 2 manométrique comporte une portion 25 amont cylindrique axiale rectiligne, une portion 26 centrale hélicoïdale 26, 126 et d'une portion radiale 21 droite rectiligne formant l'aiguille.

La portion amont 25 rectiligne du tube 2 manométrique est insérée dans un orifice 12 du corps 1 du manomètre et est liée de façon étanche à ce corps 1, par exemple via une brasure/soudure 22. Une partie 26 de la portion centrale hélicoïdale du tube 2 est située à l'intérieur de l'alésage 13 du corps 1 tandis qu'une autre partie 126 se trouve à l'extérieur de l'alésage 13.

Un jeu est prévu entre le diamètre extérieur du tube 2 manométrique et le diamètre interne de l'alésage 13. Ce jeu est dimensionné de préférence pour assurer la liberté de déformation nécessaire et suffisante du tube 2 manométrique, entre une configuration « non pressurisé » et une configuration « pressurisé à la pression maximum de service ».

Ainsi, l'alésage 13 forme un guide pour la portion centrale 26 du tube 2 évitant des déformations permanentes du tube 2 dues à des sollicitations de flexions excessives causées par exemple par des chocs.

L'extrémité aval de la portion centrale 126 hélicoïdale du tube 2 débouche quant à elle dans une zone 4 de lecture du boîtier 1 munie de repères ou graduations 15. La zone 4 de lecture est refermée par une fenêtre 3 translucide de préférence transparente.

Cette extrémité aval de la portion 126 hélicoïdale du tube 2 est centrée via un axe 31 solidaire de la fenêtre 3. L'axe 31 est logé à l'intérieur de la portion 26, 126 hélicoïdale du tube 2.

De préférence un jeu (espace) est prévu entre le diamètre intérieur du tube 2 hélicoïdal et le diamètre extérieur de l'axe 31. Ce jeu correspond au moins comme l'espace de liberté de déformation nécessaire et suffisant pour le tube 2 manométrique entre un état «non pressurisé » et un état «pressurisé à la pression maximum de service » prévue.

L'axe 31 forme ainsi un support de centrage pour la portion 26, 126 hélicoïdale qui permet d'éviter des déformations permanentes du tube 2 manométrique dues à d'éventuelles sollicitations de flexions excessives causées par exemple par des chocs.

La fenêtre 3 est montée et est centrée à l'intérieur du corps 1. La fenêtre 3 peut être immobilisée via le contact des surfaces 34, 35 et via un sertissage 18 sur le corps 1. La fenêtre 3 du manomètre 6 peut optionnellement comporter un orifice 32 prévu pour mettre le volume interne du manomètre 6 à la pression atmosphérique et pouvant évacuer un débit de fuite potentiel à l'extérieur du manomètre sans risquer une éjection de pièce(s).

L'axe 31 peut, selon le procédé de fabrication choisi pour la réalisation de la fenêtre 3, être monobloc avec la fenêtre et peut être la zone privilégiée pour l'injection de la matière dans le moule de fabrication correspondant le cas échéant.

Le tube hélicoïdal 2 est terminé à son extrémité aval par une aiguille 21 dont le débattement angulaire est matérialisé et limité par des surfaces 33 et 133, par exemple solidaire de la fenêtre 3. Ces surfaces forment des butées 33, 133.

Des graduations peuvent être réparties sur le débattement angulaire fonctionnel de l'aiguille 21. Classiquement, ces graduations 15 peuvent indiquer à l'utilisateur la pression à laquelle le tube manométrique 2 est soumis, suivant une loi qui corrèle sa déformation au déplacement angulaire de l'aiguille 21.

Pour éviter des déformations permanentes du tube 2 manométrique dues à d'éventuelles sollicitations de torsions excessives causées par exemple par des chocs, le débattement angulaire A1 de l'aiguille 21 peut également être limité comme illustré à la figure 4.

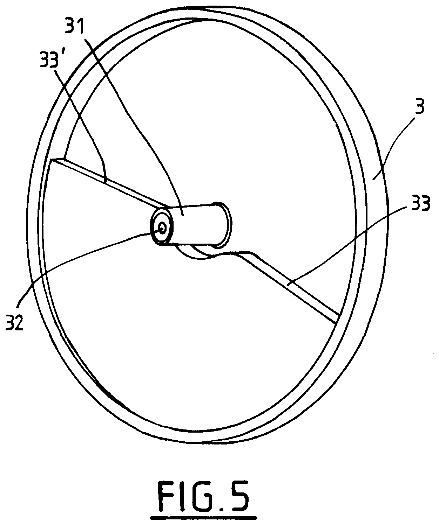

Par exemple, la fenêtre 3 peut comprendre un secteur angulaire A2 dans lequel l'aiguille 21 peut se déplacer. Ce secteur angulaire A2 peut être délimité par deux surfaces extrêmes 33 et 133 formant des butées (cf. également la figure 5). Ce secteur angulaire A2 est défini comme étant la liberté de mouvement nécessaire et suffisant à l'aiguille 21, entre une configuration «tube 2 manométrique non pressurisé » et une configuration « tube 2 manométrique pressurisé à la pression maximum de service ».

Le jeu angulaire A3 entre l'aiguille 21 et la première butée 33 est prévu pour permettre une liberté de mouvement à l'aiguille 21 pour absorber de faibles oscillations dues à des vibrations causées par exemple lors des phases de transport lorsque le tube 2 manométrique n'est pas pressurisé.

Le jeu angulaire A4 entre l'aiguille 21 et l'autre butée 133 limite le mouvement de l'aiguille 21 lorsque le tube manométrique 2 est pressurisé à la pression maximum de service, de manière à ne pas dépasser le domaine élastique du tube 2.

Bien entendu, en variante ce secteur angulaire A1 pourrait être délimité par des butées formées au niveau du cadran (zone de lecture) et ainsi permettre l'association entre différents tubes 2 manométriques et différents cadrans gradués.

Tout en étant de structure simple et peu coûteuse, l'invention permet d'améliorer la tenue et la solidité des manomètres de type hélicoïdaux.

## Revendications

1. Manomètre de mesure et d'indication de la pression comprenant un corps (1) muni d'une surface (11) d'attache destinée à coopérer avec un support pour le manomètre, un tube (2) manométrique logé au moins en partie dans le corps (1), le tube (2) manométrique comprenant une extrémité amont (23) ouverte communiquant avec l'extérieur du corps (1), une portion centrale (26, 126) tubulaire hélicoïdale raccordée à une extrémité aval comprenant une tige formant une aiguille (21), l'aiguille (21) étant mobile angulairement dans une zone (4) de lecture du boîtier (1) munie de repères ou graduations (15), la zone (4) de lecture étant refermée par une fenêtre (3) translucide, **caractérisé en ce que** la face de la fenêtre (3) située en vis-à-vis de l'aiguille (21) comprend un axe (31) de positionnement du tube (2) manométrique, l'axe (31) de positionnement étant logé au centre de l'extrémité de la portion hélicoïdale (26, 126) du tube (2) qui débouche dans la zone (4) de lecture.

2. Manomètre selon la revendication 1, **caractérisé en ce que** l'axe (31) de positionnement s'étend à l'intérieur de la portion (26, 126) hélicoïdale sur une partie de la longueur de cette portion (26, 126) hélicoïdale et jusqu'à une portion située hors de la zone (4) de lecture.

3. Manomètre selon la revendication 1 ou 2, **caractérisé en ce que** l'axe (31) de positionnement est solidaire de la fenêtre (3) ou est monobloc avec la fenêtre (3).

4. Manomètre selon l'une quelconque des revendications 1 à 3, **caractérisé en ce que** la zone (4) de lecture du boîtier (1) comprend une ou plusieurs butées (33, 133) de limitation de la rotation de l'aiguille (21).

5. Manomètre selon la revendication 4, **caractérisé en ce que** la au moins une butée (33, 133) est fixée ou est monobloc avec l'un au moins des éléments suivants : la fenêtre (3), le corps (1) définissant la zone (4) de lecture, un support de graduation disposé dans la zone (4) de lecture.

6. Manomètre selon la revendication 4 ou 5, **caractérisé en ce qu'**il comporte une première (33) et une seconde (133) butées de limitation de la rotation de l'aiguille (21), les deux butées (33, 133) définissant un secteur angulaire de rotation pour l'aiguille (21) entre deux positions correspondant respectivement à une configuration « non pressurisée » du tube (2) manométrique et une configuration «pressurisée à une pression maximum de service déterminée » du tube (2) manométrique, dans la configuration non pressurisée du tube (2) un jeu est prévu entre l'aiguille (21) et la première butée (33) pour permettre une liberté de mouvement à l'aiguille (21) de façon à absorber des oscillations dues à des vibrations.

7. Manomètre selon l'une quelconque des revendications 1 à 6, **caractérisé en ce que** le tube (2) manométrique comprend, d'un seul tenant, une extrémité (23) amont rectiligne et ouverte pour accueillir du gaz sous pression, la portion centrale (26, 126) hélicoïdale rectiligne et l'aiguille (21) raccordées radialement à une extrémité de la portion centrale (26, 126) hélicoïdale.

8. Manomètre selon la revendication 7, **caractérisé en ce qu'**au moins une partie (26) de la portion centrale (26, 126) hélicoïdale rectiligne est logée dans une portion de forme générale cylindrique du corps (1) et munie de la surface (11) d'attache.

9. Manomètre selon l'une quelconque des revendications 1 à 8, **caractérisé en ce qu'**il comporte un jeu entre l'axe (31) de positionnement et la portion hélicoïdale (26, 126) qui l'accueille, ledit jeu étant prévu pour permettre la déformation du tube (2) entre un état non pressurisé et un état pressurisé de son volume intérieur par rapport à l'extérieur.

10. Bouteille de gaz sous pression comprenant un robinet (5) muni d'un manomètre, **caractérisée en ce que** le manomètre (6) est conforme à l'une quelconque des revendications 1 à 9.

## Patentansprüche

1. Manometer zum Messen und Angeben des Drucks, das einen Körper (1) umfasst, der mit einer Befestigungsoberfläche (11) versehen ist, die dazu bestimmt ist, mit einem Träger für das Manometer zusammenzuwirken, eine Rohrfeder (2), die mindestens teilweise in dem Körper (1) aufgenommen ist, wobei die Rohrfeder (2) ein stromabwärtiges offenes Ende (23) umfasst, das mit dem Äußeren des Körpers (1) in Verbindung steht, einen schraubenförmigen röhrenförmigen zentralen Abschnitt (26, 126), der an ein stromabwärtiges Ende angeschlossen ist, der einen Schaft umfasst, der eine Nadel (21) bildet, wobei die Nadel (21) winkelig in einer Lesezone (4) des Gehäuses (1), die mit Kennzeichnungen oder Skalen (15) versehen ist, beweglich ist, wobei die Lesezone (4) durch ein durchsichtiges Fenster (3) verschlossen ist, **dadurch gekennzeichnet, dass** die Seite des Fensters (3), die der Nadel (21) gegenüber liegt, eine Achse (31) zum Positionieren der Rohrfeder (2) umfasst, wobei die Positionierungsachse (31) in der Mitte des Endes des schraubenförmigen Abschnitts (26, 126) der Rohrfeder (2), der in der Lesezone (4) mündet, aufgenommen ist.

2. Manometer nach Anspruch 1, **dadurch gekennzeichnet, dass** sich die Positionierungsachse (31) im Inneren des schraubenförmigen Abschnitts (26, 126) auf einem Teil der Länge dieses schraubenförmigen Abschnitts (26, 126) und bis zu einem Abschnitt, der außerhalb der Lesezone (4) liegt, erstreckt.

3. Manometer nach Anspruch 1 oder 2, **dadurch gekennzeichnet, dass** die Positionierungsachse (31) fest mit dem Fenster (3) verbunden ist oder aus einem Stück mit dem Fenster (3) besteht.

4. Manometer nach einem der Ansprüche 1 bis 3, **dadurch gekennzeichnet, dass** die Lesezone (4) des Gehäuses (1) einen oder mehr Anschläge (33, 133) zum Begrenzen der Drehung der Nadel (21) umfasst.

5. Manometer nach Anspruch 4, **dadurch gekennzeichnet, dass** der mindestens eine Anschlag (33, 133) an mindestens einem der folgenden Elemente befestigt ist oder aus einem Stück mit ihnen besteht: an dem Fenster (3), dem Körper (1), der die Lesezone (4) definiert, einem Skalenträger, der in der Lesezone (4) angeordnet ist.

6. Manometer nach Anspruch 4 oder 5, **dadurch gekennzeichnet, dass** er einen ersten (33) und einen zweiten Begrenzungsanschlag (133) der Drehung der Nadel (21) umfasst, wobei die zwei Anschläge (33, 133) einen Winkelsektor zur Drehung der Nadel (21) zwischen zwei Positionen definiert, die jeweils einer Konfiguration "ohne Druckbeaufschlagung" der Rohrfeder (2) und einer Konfiguration "auf einen bestimmten maximalen Betriebsdruck beaufschlagt" der Rohrfeder (2) definieren, bei der nicht mit Druck beaufschlagten Konfiguration der Rohrfeder (2) ein Spiel zwischen der Nadel (21) und dem ersten Anschlag (33) vorgesehen ist, um der Nadel (21) eine Bewegungsfreiheit derart zu erlauben, dass Oszillationen aufgrund von Schwingungen absorbiert werden.

7. Manometer nach einem der Ansprüche 1 bis 6, **dadurch gekennzeichnet, dass** die Rohrfeder (2) aus einem Stück ein stromaufwärtiges geradliniges und offenes Ende (23) umfasst, um Gas unter Druck aufzunehmen, wobei der geradlinige schraubenförmige zentrale Abschnitt (26, 126) und die Nadel (21) radial an einem Ende des schraubenförmigen zentralen Abschnitts (26, 126) angeschlossen sind.

8. Manometer nach Anspruch 7, **dadurch gekennzeichnet, dass** mindestens ein Teil (26) des geradlinigen schraubenförmigen zentralen Abschnitts (26, 126) in einem Abschnitt mit allgemeiner Zylinderform des Körpers (1) aufgenommen und mit der Befestigungsoberfläche (11) versehen ist.

9. Manometer nach einem der Ansprüche 1 bis 8, **dadurch gekennzeichnet, dass** er ein Spiel zwischen der Positionierungsachse (31) und dem schraubenförmigen Abschnitt (26, 126), der sie aufnimmt, umfasst, wobei das Spiel vorgesehen ist, um das Verformen der Rohrfeder (2) zwischen einem nicht mit Druck beaufschlagten Zustand und einem mit Druck beaufschlagten Zustand ihres Innenraums in Bezug zur Außenseite zu erlauben.

10. Gasflasche unter Druck, die einen Hahn (5) umfasst, der mit einem Manometer versehen ist, **dadurch gekennzeichnet, dass** das Manometer (6) einem der Ansprüche 1 bis 9 entspricht.

## Claims

1. Pressure gauge for measuring and indicating pressure comprising a body (1) provided with a fastener surface (11) that is intended to engage with a support for the pressure gauge, a manometric tube (2) that is at least partially housed in the body (1), the manometric tube (2) comprising an open upstream end (23) that communicates with the outer side of the body (1), a helical, tubular, central portion (26, 126) connected to a downstream end comprising a rod forming a needle (21), the needle (21) being angularly mobile in a reading area (4) of the casing (1) provided with markings or graduations (15), the reading area (4) being closed by a translucent window (3), **characterised in that** the surface of the window (3) facing the needle (21) comprises an axis (31) for positioning the manometric tube (2), the positioning axis (31) being housed at the centre of the end of the helical portion (26, 126) of the tube (2) that opens out into the reading area (4).

2. Pressure gauge according to claim 1, **characterised in that** the positioning axis (31) extends within the helical portion (26, 126) over a part of the length of said helical portion (26, 126) and as far as a portion located outside of the reading area (4).

3. Pressure gauge according to claim 1 or 2, **characterised in that** the positioning axis (31) is integral with the window (3) or is made in one piece with the window (3).

4. Pressure gauge according to any one of claims 1 to 3, **characterised in that** the reading area (4) of the casing (1) comprises one or more travel stops (33, 133) for limiting the rotation of the needle (21).

5. Pressure gauge according to claim 4, **characterised in that** the at least one travel stop (33, 133) is secured to or is made in one piece with at least one of the following elements: the window (3), the body (1) defining the reading area (4), or a graduation support arranged in the reading area (4).

6. Pressure gauge according to claim 4 or 5, **characterised in that** it comprises a first (33) and a second (133) travel stop for limiting the rotation of the needle (21), the two travel stops (33, 133) defining an angular field of rotation for the needle (21) between two positions respectively corresponding to a "non-pressurised" configuration of the manometric tube (2) and a "pressurised at a determined maximum operating pressure" configuration of the manometric tube (2); in the non-pressurised configuration of the tube (2), a gap is provided between the needle (21) and the first travel stop (33) to allow for a freedom of movement of the needle (21) so as to absorb oscillations caused by vibrations.

7. Pressure gauge according to any one of claims 1 to 6, **characterised in that** the manometric tube (2) comprises, made in one piece, a linear upstream end (23) that is open for receiving pressurised gas, and the linear, helical, central portion (26, 126) and the needle (21) that are radially connected to one end of the helical central portion (26, 126).

8. Pressure gauge according to claim 7, **characterised in that** at least one part (26) of the linear, helical, central portion (26, 126) is housed in a portion, having an overall cylindrical shape, of the body (1) and provided with the fastener surface (11).

9. Pressure gauge according to any one of claims 1 to 8, **characterised in that** it comprises a gap between the positioning axis (31) and the helical portion (26, 126) that receives the latter, said gap being provided to allow for the deformation of the tube (2) between a non-pressurised state and a pressurised state in which its inner volume is pressurised in relation to its exterior.

10. Pressurised gas bottle comprising a valve (5) provided with a pressure gauge, **characterised in that** the pressure gauge (6) complies with any one of claims 1 to 9.
